# EUROPÄISCHE PATENTSCHRIFT

(11) **EP 2 455 250 B1**
(45) Veröffentlichungstag und Bekanntmachung des Hinweises auf die Patenterteilung: **23.03.2016**
(21) Anmeldenummer: 11184290.2
(22) Anmeldetag: 07.10.2011
(51) Int. Cl.: B60K 31/00, G08G 1/16, B60W 30/06, B60R 21/0134

(54) **Verfahren zur Erfassung der Umgebung eines Fahrzeugs**
Method for detecting the environment of a vehicle
Procédé pour détecter l'environnement d'un véhicule

(30) Priorität: 22.11.2010 DE 102010044219
(43) Veröffentlichungstag der Anmeldung: 23.05.2012
(73) Patentinhaber: Robert Bosch GmbH, 70442 Stuttgart (DE)
(72) Erfinder: Seiter, Michael, 71735 Eberdingen-Hochdorf (DE); Raisch, Florian, 71116 Gaertringen (DE)

(56) Entgegenhaltungen:
- EP-A1- 2 081 131
- DE-A1- 10 025 678
- DE-A1-102009 019 300
- JP-A- 11 016 099

## Beschreibung

### Stand der Technik

Die Erfindung betrifft ein Verfahren zur Erfassung der Umgebung eines Fahrzeugs unter Verwendung einer Kamera sowie eine Vorrichtung zur Durchführung des Verfahrens.

Verfahren zur Erfassung der Umgebung eines Fahrzeugs sind zum Beispiel Teil von Fahrassistenzsystemen, wie sie beispielsweise zur Unterstützung eines Fahrers zum Einparken in eine Parklücke eingesetzt werden. Auch bei Abstandsregelsystemen werden solche Verfahren zur Erfassung der Umgebung eines Fahrzeugs eingesetzt.

Zur Erfassung der Umgebung ist es üblich, als Abstandssensoren zum Beispiel Ultraschallsensoren oder Radarsensoren einzusetzen. Zur Erfassung der Umgebung wird von den Sensoren ein Signal gesendet, das von einem Objekt in der Umgebung des Fahrzeugs reflektiert wird, und das reflektierte Echo wird wieder empfangen. Aus der Laufzeit des Signals von Senden bis zum Empfang des Echos kann dann der Abstand zu einem Objekt berechnet werden. Durch den Einsatz von mindestens zwei Sensoren lässt sich zusätzlich auch die Richtung des Objekts bestimmen. Anhand der reflektierten Echos kann dann eine Umgebungskarte erstellt werden, die die Umgebung des Fahrzeugs darstellt.

Neben solchen Abstandssensoren ist es auch möglich, optische Sensoren, zum Beispiel Kameras, einzusetzen. Die Auswertung der Umgebung des Fahrzeugs erfolgt in diesem Fall durch ein geeignetes Bildbearbeitungssystem. Aus DE-A 100 25 678 ist es zum Beispiel bekannt, Verkehrsteilnehmer und Hindernisse auf der Grundlage von Kamerabildern zu detektieren. Die Kamerabilder werden zusätzlich zur Bestimmung der Entfernung von der Kamera und zur Klassifikation des Verkehrsteilnehmers oder Hindernisses eingesetzt. Um mögliche Unfälle zu vermeiden, werden potentielle Unfallgegner erkannt und identifiziert. Hierzu werden in einem ersten Schritt potentielle Unfallgegner in den Bilddaten einer Monobildkamera markiert und anschließend deren Entfernung und relative Geschwindigkeit bestimmt, so dass gezielt gefährdete Objekte in Echtzeit einer Typ-Klassifikation unterzogen werden können. Die Erkennungstätigkeit wird in mehrere Stufen aufgespaltet, so dass die Echtzeitfähigkeit des Systems auch mit konventionellen, bereits im Fahrzeug vorhandenen Sensoren, beispielsweise Ultraschallsensoren oder Radarsensoren, möglich ist.

Nachteil des Verfahrens ist jedoch, dass mit der Kamera ein umfangreiches Bild aufgenommen wird, das verarbeitet werden muss. Dies erfordert einen großen Rechenaufwand und eine komplexe Bildauswertung.

Aus dem Dokument EP 2 081 131 A1 ist ein Verfahren zur Erkennung von Objekten, insbesondere von Fußgängern bekannt. Dabei nimmt die Kamera Bilder in einem vorbestimmten Abstand vor der Kamera auf. Es können dabei auch mehrere Abstandsbereiche im Aufnahmekegel der Kamera definiert werden.

### Offenbarung der Erfindung

### Vorteile der Erfindung

Beim erfindungsgemäßen Verfahren zur Erfassung der Umgebung eines Fahrzeugs wird mit einer Kamera ein schmaler Bereich in einem vorgegebenen Abstand zum Fahrzeug erfasst und geprüft, ob sich ein Objekt in dem schmalen Bereich bewegt. Ein innerhalb des vorgegebenen Abstandes liegender Bereich wird mit Abstandssensoren erfasst, wobei jeweils nur der Abschnitt des innerhalb des vorgegebenen Abstandes liegenden Bereichs erfasst wird, in den sich das Objekt bewegt hat.

Dadurch, dass mit der Kamera nur ein schmaler Bereich in einem vorgegebenen Abstand zum Fahrzeug erfasst wird, lässt sich die Bildverarbeitung sehr viel einfacher gestalten und der Rechenaufwand zur Auswertung der Bilder wird reduziert. Zudem kann dann innerhalb des Bereiches durch Erkennung eines den Abstand überschreitenden Objektes gezielt nur der Bereich erfasst werden, in dem sich das Objekt befindet, so dass auch hier eine einfachere Überwachung möglich ist, da nicht der gesamte Bereich überwacht werden muss und alle Sensoren zur Erfassung des Bereiches gleichzeitig betrieben werden müssen.

Als schmaler Bereich im Sinne der vorliegenden Erfindung wird ein Bereich bezeichnet, der gerade so breit ist, dass ein Objekt, das sich in den Bereich bewegt, sicher erkannt wird. Bevorzugt ist es, wenn der schmale Bereich eine Breite von 10 bis 50 Pixeln aufweist. Die Breite ist hier der Abstand zwischen zwei Punkten auf einer Linie, die sich radial vom Brennpunkt der Kamera erstreckt.

Um nur einen schmalen Bereich in einem vorgegebenen Abstand zu erfassen, wird von der Kamera zwar ein vollständiges Bild aufgenommen, jedoch werden nur die relevanten Bereiche des Bildes ausgewertet. Hierdurch ergibt sich ein sogenannter "Lichtschrankeneffekt". Dies hat den Vorteil, dass zur Überwachung weniger Ressourcen und Rechenzeit benötigt werden.

Mit der Kamera wird somit lediglich erfasst, ob sich ein Objekt in den Erfassungsbereich der übrigen Sensoren bewegt. Die Bewegung des Objektes wird mit der Kamera nicht weiter verfolgt.

Sobald sich ein Objekt in den Bereich, der vom vorgegebenen Abstand umschlossen ist, bewegt hat, wird dieses Objekt mit Abstandssensoren weiter erfasst und die Bewegung verfolgt. Hierbei interessieren insbesondere Richtung und Geschwindigkeit des Objektes sowie der Abstand des Objektes zum Kraftfahrzeug.

Zur Erfassung der Geschwindigkeit eines Objektes, das sich auf das Fahrzeug zu bewegt oder vom Fahrzeug weg bewegt, wird in einer bevorzugten Ausführungsform der Doppler-Effekt genutzt. Durch den Doppler-Effekt lässt sich bereits bei Erfassung mit nur einem Sensor die Geschwindigkeit aufgrund der Änderung der Frequenz der gesendeten Wellen erfassen. Neben der Erfassung der Laufzeit des Signals ist es somit lediglich auch erforderlich, die Frequenz des empfangenen Signals zu erfassen, um so den Abstand des Objekts zum Sensor und die Geschwindigkeit in Richtung auf den Sensor zu bestimmen.

Da sich mit dem Doppler-Effekt lediglich die Geschwindigkeitskomponente in Richtung auf den Sensor zu erfassen lässt, ist es weiterhin bevorzugt, zur Ermittlung der Geschwindigkeit eines Objekts, das sich parallel zum Fahrzeug bewegt, ein optisches Erfassungssystem zu nutzen. Als optisches Erfassungssystem eignet sich in diesem Fall zum Beispiel eine Kamera. Wenn somit mit der Kamera ein Objekt erfasst wurde, das in den vom vorgegebenen Abstand erfassten Bereich gelangt, kann gegebenenfalls mit der gleichen Kamera oder auch mit einer anderen Kamera das Objekt verfolgt werden und durch geeignete Bildverarbeitung die Geschwindigkeit des Objektes bestimmt werden. Hierzu ist es zum Beispiel möglich, die erfasste Position eines detektierten Objektes in Relation zum Fahrzeug in zwei oder mehr nacheinander aufgenommenen Bildern zu vergleichen und aus der relativen Position die Geschwindigkeit zu bestimmen.

In einer Ausführungsform der Erfindung wird der Abschnitt, der von den Abstandssensoren erfasst wird, jeweils anhand der Geschwindigkeit und der Richtung des erfassten Objektes in Bezug auf das Fahrzeug so bestimmt, dass sich das Objekt in dem erfassten Abschnitt befindet. Hierdurch wird gewährleistet, dass ein Objekt, das sich innerhalb des Bereichs befindet, der innerhalb des vorgegebenen Abstandes liegt, nicht aus dem Erfassungsbereich der Sensoren gerät. Wenn sich das Objekt so bewegt, dass es aus dem Erfassungsbereich eines Sensors gelangt, wird ein benachbarter Sensor aktiviert, in dessen Erfassungsbereich sich das Objekt bewegt. Um jeweils die richtigen Sensoren zu aktivieren, wird die Geschwindigkeit und die Richtung des erfassten Objektes herangezogen. Aus Richtung und Geschwindigkeit lässt sich erkennen, wohin sich das Objekt bewegt und welche Sensoren zur Erfassung des Objektes notwendig sind.

Als Abstandssensoren, mit denen der innerhalb des vorgegebenen Abstandes liegende Bereich überwacht werden kann, eignen sich gängige Abstandssensoren, wie sie zum Beispiel auch derzeit schon in Fahrassistenzsystemen eingesetzt werden. Solche Sensoren sind zum Beispiel Ultraschallsensoren, Radarsensoren, Infrarotsensoren oder LIDAR-Sensoren. Zusätzlich ist es auch möglich, optische Sensoren, beispielsweise eine Kamera, einzusetzen. Bevorzugt ist jedoch die Verwendung von Ultraschallsensoren oder Radarsensoren.

Das erfindungsgemäße Verfahren kann zum Beispiel zur Unterstützung des Fahrers des Kraftfahrzeuges bei Fahrmanövern eingesetzt werden. Solche Fahrmanöver sind zum Beispiel Einparkmanöver. Auch Rangiermanöver, zum Beispiel an engen Kreuzungen oder in engen Straßen, können mit einem solchen Fahrassistenzsystem unterstützt werden. Auch ist es möglich, das erfindungsgemäße Verfahren zum Beispiel in Abstandsregelsystemen einzusetzen. Bevorzugt wird das erfindungsgemäße Verfahren eingesetzt in Verfahren zur Unterstützung des Fahrers bei Fahrmanövern, bei langsamen Geschwindigkeiten, zum Beispiel bei Einparkvorgängen oder Rangiervorgängen.

Wenn mit dem erfindungsgemäßen Verfahren ein ruhendes Objekt erkannt wird, wird die Annäherung des Fahrzeugs an das Objekt beobachtet und bei einer Annäherung unter einen minimalen Abstand, der fest vorgegeben sein kann oder aber von der Geschwindigkeit des Fahrzeugs abhängt, wird der Fahrer über die Annäherung an das Objekt gewarnt. Die Warnung des Fahrers kann dabei zum Beispiel akustisch, optisch und/oder haptisch erfolgen. So ist es zum Beispiel möglich, den Fahrer akustisch und optisch oder akustisch und haptisch zu warnen. Auch eine optische und haptische Warnung des Fahrers ist möglich. Weiterhin ist es auch möglich, dass der Fahrer akustisch, optisch und haptisch gewarnt wird.

Als optische Warnung werden üblicherweise geeignete Warnleuchten eingesetzt. Hierbei ist es zum Beispiel möglich, mehrere LEDs vorzusehen, wobei bei Annäherung an ein Objekt die Anzahl der aufleuchtenden LEDs zunimmt. Weiterhin kann bei Unterschreitung eines vorgegebenen Abstandes eine Farbänderung vorgenommen werden, so dass dann zum Beispiel rote LEDs aufleuchten, um den Fahrer zusätzlich zu warnen. Alternativ ist es auch möglich, zum Beispiel das Fahrzeug in einer zweidimensionalen Darstellung in Draufsicht auf einen Bildschirm im Armaturenbereich des Fahrers darzustellen und in dieser Darstellung ebenfalls Objekte, die in den Erfassungsbereich der Sensoren gelangt sind, zu zeigen. Die Annäherung des Fahrzeugs an ein Objekt wird dann in der zweidimensionalen Darstellung angezeigt. Um dem Fahrer eine Annäherung unter einen vorgegebenen Wert deutlich zu signalisieren, ist es hier zum Beispiel möglich, Farbänderungen vorzunehmen. So kann zum Beispiel das Objekt, dem sich das Fahrzeug nähert, in der Farbe geändert werden oder aber die gesamte Anzeige wechselt die Farbe. Als haptische Warnung ist es zum Beispiel möglich, Vibrationen, beispielsweise Vibrationen am Fahrpedal, am Bremspedal oder am Lenkrad, oder auch Vibrationen am Sitz vorzusehen. Zur akustischen Warnung werden üblicherweise Signaltöne gesendet, wobei bei Annäherung an ein Objekt der Abstand zwischen zwei Tönen abnimmt und bei Unterschreitung eines Mindestabstands ein Dauerton gesendet wird.

In einer weiteren Ausführungsform ergeht eine zusätzliche Warnung an den Fahrer, wenn ein sich bewegendes Objekt erfasst wird. Die Warnung an den Fahrer kann in diesem Fall ebenfalls akustisch, optisch und/oder haptisch erfolgen. Insbesondere in einer zweidimensionalen Darstellung in Draufsicht ist es möglich, ein sich bewegendes Objekt farblich hervorzuheben.

Wenn die Warnung durch zweidimensionale optische Darstellung erfolgt, so ist es zum Beispiel möglich, einen Monitor im Sichtbereich des Fahrers vorzusehen. Hierzu ist es möglich, einen separaten Monitor für das Fahrassistenzsystem, das das Verfahren nutzt, einzusetzen oder aber auch einen bereits vorhandenen Monitor, zum Beispiel einen Monitor eines Navigationssystems.

Der vorgegebene Abstand, in dem der schmale Bereich mit der Kamera erfasst wird, kann zum Beispiel durch die verwendeten Abstandssensoren zur Überwachung innerhalb des vorgegebenen Abstandes liegenden Bereichs vorgegeben sein. So ist es zum Beispiel möglich, den vorgegebenen Abstand so zu wählen, dass dieser den Bereich umschließt, innerhalb dem eine Erfassung mit den Abstandssensoren möglich ist. Alternativ ist es selbstverständlich auch möglich, den vorgegebenen Abstand zum Beispiel geschwindigkeitsabhängig einzustellen. Bei einer höheren Geschwindigkeit wird der vorgegebene Abstand größer gewählt und bei einer kleineren Geschwindigkeit kann der vorgegebene Abstand kleiner gewählt werden. Der vorgegebene Abstand wird dabei jeweils so gewählt, dass der Anhalteweg des Fahrzeugs, der sich aus Reaktionsweg und Bremsweg zusammensetzt, kleiner ist als der vorgegebene Abstand.

Da mit dem erfindungsgemäßen Verfahren lediglich ein schmaler Bereich im vorgegebenen Abstand erfasst wird und dadurch die Rechenlast der Bildverarbeitung reduziert wird, ist es möglich, die Kamera auch für andere Aufgaben zu nutzen.

Eine Vorrichtung, mit der das Verfahren durchgeführt werden kann, umfasst mindestens eine Kamera zur optischen Erfassung der Umgebung und Mittel zur Auswertung des von der Kamera erfassten Bildes, um zu erkennen, ob sich ein Objekt in einem Erfassungsbereich in einem vorgegebenen Abstand der Kamera bewegt, sowie Abstandssensoren zur Erfassung des Bereichs, der von dem Erfassungsbereich der Kamera umschlossen wird.

Als Kamera kann eine beliebige Kamera eingesetzt werden, mit der digitale Bilder erzeugt werden können. Hierbei kann es sich sowohl um eine Kamera handeln, mit der Farbbilder erzeugt werden, als auch ein Kamera mit einem Sensor, der nur Schwarz/Weiß-Bilder aufnimmt. Da mit der Kamera nur erfasst werden muss, ob ein Objekt in den Erfassungsbereich der Abstandssensoren gelangt, ist im Allgemeinen eine Kamera mit einem Schwarz/Weiß-Sensor ausreichend.

Die Kamera kann im Fahrzeug an verschiedenen Stellen verbaut sein. So ist es zum Beispiel möglich, die Kamera hinter der Windschutzscheibe oder der Heckscheibe, im Kofferraumdeckel nahe des Türgriffs, im Stoßfänger, seitlich in den Spiegeln oder nahe den Kotflügeln, in der Front im Stoßfänger oder im Kühlergrill zu positionieren.

Die Mittel zur Auswertung des von der Kamera erfassten Bildes, um zu erkennen, ob sich ein Objekt in einen Erfassungsbereich in einem vorgegebenen Abstand der Kamera bewegt, umfassen üblicherweise einen Prozessor sowie eine Speichereinheit, auf der ein Computerprogramm zur Auswertung der Bilder gespeichert ist. Zusätzlich ist es auch möglich, auf der Speichereinheit zum Beispiel erfasste Bilder zu speichern, um mehrere in Folge aufgenommene Bilder miteinander vergleichen zu können. Der Prozessor und die Speichermittel können dabei in einem nur für die Kamera eingesetzten Steuergerät enthalten sein. Alternativ ist es auch möglich, ein universales Steuergerät, mit dem auch andere Aufgaben erfüllt werden können, zu nutzen. So ist es zum Beispiel möglich, dass sowohl zur Auswertung der von der Kamera erfassten Bilder als auch der Auswertung der von den Abstandssensoren erfassten Daten das gleiche Steuergerät verwendet wird. Alternativ können auch getrennte Steuergeräte verwendet werden, wobei in diesem Fall ein Datenaustausch zwischen den Steuergeräten notwendig ist.

Als Abstandssensoren zur Erfassung des innerhalb des vorgegebenen Abstands liegenden Bereiches können, wie vorstehend bereits beschrieben, zum Beispiel Ultraschallsensoren, Radarsensoren, Infrarotsensoren oder LIDAR-Sensoren eingesetzt werden. Besonders bevorzugt sind davon Ultraschallsensoren und Radarsensoren.

Das Steuergerät, mit dem die von den Abstandssensoren erfassten Daten verarbeitet werden, umfasst vorzugsweise zusätzlich eine Auswerteeinheit, mit der die von den Abstandssensoren erfassten Daten ausgewertet werden, um Abstand und Geschwindigkeit eines Objektes relativ zum Fahrzeug zu bestimmen. Die Auswerteeinheit kann alternativ auch zum Beispiel direkt mit den Sensoren verbunden sein, so ist es zum Beispiel möglich, auch Abstandssensoren einzusetzen, die mit eigenen Prozessoren ausgestattet sind. In diesem Fall ist es nicht notwendig, ein separates Steuergerät vorzusehen, das als Auswerteeinheit zur Bestimmung von Abstand und Geschwindigkeit des Objektes dient.

### Kurze Beschreibung der Zeichnungen

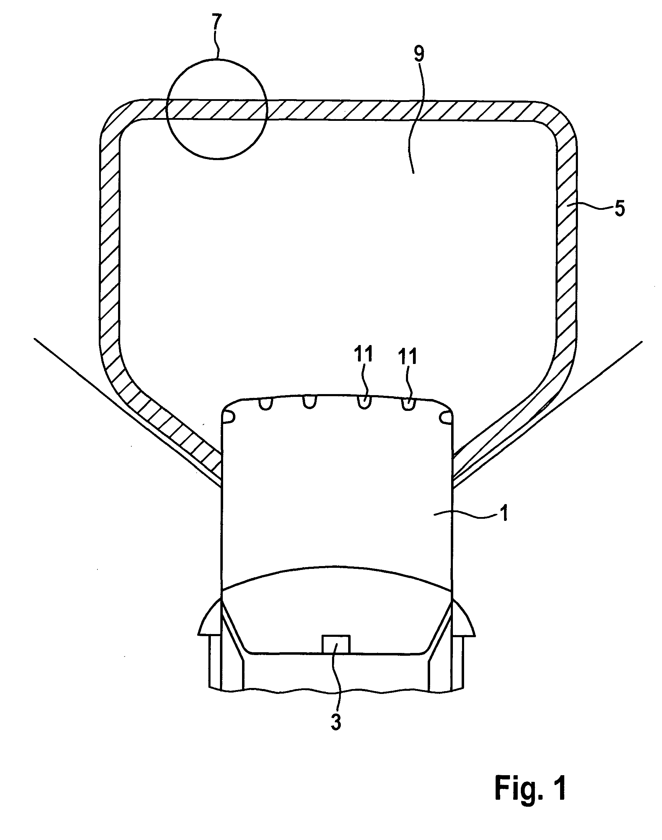

Ausführungsbeispiele der Erfindung sind in der Zeichnung dargestellt und werden in der nachfolgenden Beschreibung näher erläutert.

Die einzige Figur zeigt schematisch die Erfassung der Umgebung eines Kraftfahrzeugs im Frontbereich des Fahrzeugs.

### Ausführungsformen der Erfindung

In der einzigen Figur ist schematisch die Erfassung der Umgebung des Fahrzeugs im Frontbereich des Fahrzeugs dargestellt.

Zur Erfassung der Umgebung umfasst ein Fahrzeug 1 eine Kamera 3, mit der ein schmaler Bereich 5 in einem vorgegebenen Abstand zum Fahrzeug 1 überwacht wird.

Zur Erfassung des schmalen Bereichs 5 in einem vorgegebenen Abstand, wird von der Kamera 3 ein vollständiges Bild aufgenommen, von diesem werden jedoch nur die relevanten Bereiche ausgewertet, so dass sich ein sogenannter "Lichtschrankeneffekt" ergibt.

Bei einer Auswertung des von der Kamera 3 erfassten schmalen Bereichs 5 wird geprüft, ob ein Objekt 7 sich in den schmalen Bereich 5 bewegt.

Erfindungsgemäß wird ein Bereich 9 innerhalb des schmalen Bereiches 5 mit Abstandssensoren 11 erfasst. Hierbei deckt jeder der Abstandssensoren 11, im hier dargestellten Beispiel handelt es sich um sechs Abstandssensoren, einen Erfassungsbereich innerhalb des Bereichs 9 ab.

Sobald das Objekt 7 über den von der Kamera 3 erfassten schmalen Bereich 5 in den Bereich 9 gelangt, wird der Bereich 9 in dem Abschnitt überwacht, in den das Objekt 7 in den Bereich 9 eingedrungen ist. Hierzu werden jeweils die Abstandssensoren 11 genutzt, die den entsprechenden Abschnitt, in dem sich das Objekt 7 befindet, erfassen.

Dadurch, dass mit den Abstandssensoren 11 jeweils nur der Abschnitt innerhalb des Bereichs 9 erfasst wird, in dem sich ein Objekt 7 befindet, kann der benötigte Rechenaufwand reduziert werden. Eine weitere Reduktion des benötigten Rechenaufwands ergibt sich dadurch, dass mit der Kamera nicht der gesamte Bereich 9 erfasst wird, sondern nur der schmale Bereich 5, der den Bereich 9 umschließt, der von den Abstandssensoren 11 abgedeckt wird.

Sobald das Objekt 7 den schmalen Bereich 5 passiert hat, können Geschwindigkeit, Richtung und Abstand des Objektes 7 mit Hilfe der Abstandssensoren 11 erfasst werden. Die Geschwindigkeit des Objektes 7 auf das Fahrzeug 1 zu, wird zum Beispiel mit Hilfe des Doppler-Effektes bestimmt. Der Abstand des Objektes 7 ergibt sich aus der Laufzeit vom Senden eines Signals vom Abstandssensor 11 bis zum Empfang des vom Objekt 7 reflektierten Echos durch den Abstandssensor 11. Zur Bestimmung der Richtung des Objektes 7 werden die Signale von zwei Abstandssensoren 11 genutzt, wobei der Schnittpunkt der Abstandskreise, die sich durch den Abstand um den Sensor 11 ergeben, die Position des Objektes 7 wiedergibt.

Mit Hilfe des Doppler-Effektes lässt sich lediglich die Geschwindigkeit des Objektes 7 direkt auf den Abstandssensor 11 zu oder vom Abstandssensor 11 weg bestimmen. Eine Geschwindigkeitskomponente quer zum Abstandssensor 11 kann zum Beispiel durch zwei aufeinander folgende Messungen bestimmt werden, in denen die Bewegung des Objektes von zwei aufeinander folgenden Messungen verglichen wird.

Weiterhin ist es auch möglich und bevorzugt, die Bewegung eines sich parallel zum Fahrzeug bewegenden Objektes 7 optisch, beispielsweise mit einer Kamera zu erfassen. Hierzu kann eine zusätzliche Kamera eingesetzt werden oder aber auch die Kamera 3, mit der der schmale Bereich 5 erfasst wird, genutzt werden.

Objekte 7, die mit dem erfindungsgemäßen Verfahren erfasst werden können, sind zum Beispiel Begrenzungen einer Parklücke, wenn das erfindungsgemäße Verfahren zur Unterstützung des Fahrers beim Einparken genutzt wird. Auch Objekte, die sich innerhalb einer Parklücke befinden oder in eine Parklücke bewegen, können mit dem erfindungsgemäßen Verfahren detektiert werden. Bei einem Fahrmanöver in engen Straßen oder Wegen oder bei einem Rangiermanöver kann das Objekt 7 zum Beispiel ein Objekt sein, das den Rangierbereich oder den vorgesehenen Fahrweg des Fahrzeugs 1 begrenzt. Auch Objekte, die sich in den Rangierbereich oder in den Fahrbereich des Fahrzeugs 1 bewegen, werden mit dem erfindungsgemäßen Verfahren erfasst.

Objekte 7, die erfasst werden können, sind zum Beispiel Fußgänger, Zweiradfahrer oder andere Fahrzeuge. Diese können entweder stehen oder sich bewegen. Weiterhin können Objekte 7, zum Beispiel wenn das Verfahren zur Unterstützung des Fahrers beim Einparken genutzt wird, Mauern, Pflanzen, Pflanzkübel oder Ähnliches sein. Insbesondere wenn es sich bei dem Objekt 7 um Fußgänger oder Zweiradfahrer handelt, bewegen sich diese im Allgemeinen. Da gerade Fußgänger zu schnellen Richtungswechseln neigen können, ist es in diesem Fall vorteilhaft, den Fahrer zu warnen, sobald ein sich bewegendes Objekt detektiert wird. Die Warnung des Fahrers kann dabei zum Beispiel - wie vorstehend bereits beschrieben - optisch, akustisch und/oder haptisch erfolgen. Durch die Warnung des Fahrers wird dieser darauf hingewiesen, besondere Aufmerksamkeit walten zu lassen.

Wenn das erfindungsgemäße Verfahren eingesetzt wird, um ein automatisches Fahrmanöver durchzuführen, bei dem Längs- und Querführung des Fahrzeugs automatisiert durchgeführt werden, ist es weiterhin vorteilhaft, bei Erfassen eines bewegten Objekts 7 den Fahrer zu warnen und gleichzeitig, da plötzliche Richtungswechsel möglich sind, das Verfahren abzubrechen und die Steuerung an den Fahrer zu übergeben.

Wenn es sich bei dem Objekt 7 um ein ruhendes Objekt handelt, so wird der Fahrer insbesondere bei Annäherung des Fahrzeugs 1 an das Objekt 7 gewarnt. Hierbei ist es zum Beispiel möglich, in Abhängigkeit vom Abstand des Objekts 7 zum Fahrzeug 1 das Warnsignal anzupassen. Bei einer optischen Warnung ist es zum Beispiel möglich, eine LED-Reihe vorzusehen, wobei immer mehr LEDs aufleuchten, je näher das Objekt 7 dem Fahrzeug 1 ist. Bei Unterschreiten eines Mindestabstands ist es zusätzlich möglich, die Farbe der LEDs zu ändern, um dem Fahrer eine zusätzliche Warnung zu geben. Alternativ ist es auch möglich, zum Beispiel auf einem geeigneten Monitor, beispielsweise einem Monitor eines Navigationssystems, ein zweidimensionales Bild darzustellen, auf dem das Fahrzeug 1 in Draufsicht dargestellt ist und Objekte 7 in Relation zum Fahrzeug 1 dargestellt werden. Auch hier ist es möglich, eine zusätzliche Warnung an den Fahrer durch farbliche Hervorhebung von Objekten, denen sich das Fahrzeug 1 nähert, zu realisieren. Alternativ ist es auch möglich, die Farbe der gesamten Anzeige zu ändern, um dem Fahrer anzuzeigen, dass eine erhöhte Aufmerksamkeit notwendig ist.

Bei einer akustischen Warnung ist es zum Beispiel möglich, repetierende Töne vorzusehen, wobei bei Annäherung an das Objekt 7 die Wiederholfrequenz der Töne abnimmt. Bei Unterschreiten eines vorgegebenen Mindestabstandes ist es dann möglich, einen Dauerton zu senden, der den Fahrer auffordert, das Fahrzeug anzuhalten, um eine Kollision zu vermeiden.

Neben der Anzeige, dass sich das Fahrzeug 1 einem Objekt 7 nähert, ist es weiterhin vorteilhaft, insbesondere wenn es sich um sich bewegendes Objekt 7 handelt, dem Fahrer anzuzeigen, dass in den Erfassungsbereich 9 der Abstandssensoren 11 ein sich bewegendes Objekt gelangt ist. Durch die Warnung wird dieser darauf hingewiesen, dass er erhöhte Vorsicht walten lassen muss.

Auch hier ist es möglich, die Warnung akustisch, optisch und/oder haptisch zu realisieren. Eine optische Warnung kann auch hier zum Beispiel durch farbliche Hervorhebung des Objekts 7 erfolgen. Eine haptische Warnung lässt sich zum Beispiel durch Vibration von einem Pedal, dem Lenkrad des Fahrzeugs 1 oder dem Sitz realisieren.

Neben der hier dargestellten Ausführungsform, in der die Kamera hinter der Windschutzscheibe positioniert ist, ist es auch möglich, die Kamera im Fahrzeug zum Beispiel hinter der Heckscheibe, im Kofferraumdeckel nahe des Türgriffs, im Stoßfänger, seitlich in den Spiegeln oder nahe den Kotflügeln, in der Front im Stoßfänger oder im Kühlergrill zu positionieren.

## Patentansprüche

1. Verfahren zur Erfassung der Umgebung eines Fahrzeugs (1), bei dem mit einer Kamera (3) ein schmaler Bereich (5) in einem vorgegebenen Abstand zum Fahrzeug (1) erfasst wird, wobei von der Kamera ein vollständiges Bild aufgenommen wird und nur die relevanten Bereiche des Bildes ausgewertet werden und geprüft wird, ob sich ein Objekt (7) in den schmalen Bereich (5) bewegt, wodurch ein Lichtschrankeneffekt erzeugt wird, und ein innerhalb des vorgegebenen Abstandes liegender Bereich (9) mit Abstandssensoren (11) erfasst wird, wobei jeweils nur der Abschnitt des innerhalb des vorgegebenen Abstandes liegenden Bereichs (9) erfasst wird, in den sich das Objekt (7) bewegt hat, wobei das Objekt mit Abstandssensoren weiter erfasst wird und nicht mit der Kamera weiter verfolgt wird.

2. Verfahren gemäß Anspruch 1, **dadurch gekennzeichnet, dass** zur Erfassung der Geschwindigkeit eines Objekts (7), das sich auf das Fahrzeug (1) zu bewegt oder vom Fahrzeug (1) weg bewegt, der Doppler-Effekt genutzt wird.

3. Verfahren gemäß Anspruch 1 oder 2, **dadurch gekennzeichnet, dass** zur Ermittlung der Geschwindigkeit eines Objekts (7), das sich parallel zum Fahrzeug (1) bewegt, ein optisches Erfassungssystem genutzt wird.

4. Verfahren gemäß einem der Ansprüche 1 bis 3, **dadurch gekennzeichnet, dass** der Abschnitt, der von den Abstandssensoren (11) erfasst wird, jeweils anhand der Geschwindigkeit und der Richtung des erfassten Objekts (7) in Bezug auf das Fahrzeug (1) so bestimmt wird, dass sich das Objekt (7) in dem erfassten Abschnitt befindet.

5. Verfahren gemäß einem der Ansprüche 1 bis 4, **dadurch gekennzeichnet, dass** bei Erfassung eines sich bewegenden Objekts (7) eine Warnung an den Fahrer des Fahrzeugs (1) ausgegeben wird.

6. Verfahren gemäß einem der Ansprüche 1 bis 5, **dadurch gekennzeichnet, dass** der vorgegebene Abstand der Abstand ist, bis zu dem eine Erfassung mit den Abstandssensoren (11) möglich ist.

7. Vorrichtung zur Durchführung des Verfahrens gemäß einem der Ansprüche 1 bis 6, umfassend mindestens eine Kamera (3) zur optischen Erfassung der Umgebung, wobei die Kamera eingerichtet ist ein vollständiges Bild aufzunehmen, und Mittel zur Auswertung des von der Kamera (3) erfassten Bildes, die eingerichtet sind, nur die relevanten Bereiche des Bildes auszuwerten, um zu erkennen, ob sich ein Objekt (7) in einen von der Kamera (3) erfassten schmalen Bereich in einem vorgegebenen Abstand bewegt, wobei ein Steuergerät vorgesehen ist, das einen sich ergebenden Lichtschrankeneffekt erfasst, sowie Abstandssensoren (11) zur Erfassung des Bereichs (9), der von dem schmalen Bereich (5) der Kamera (3) umschlossen wird, wobei das Steuergerät eingerichtet ist das Objekt mit Abstandssensoren weiter zu erfassen und nicht mit der Kamera weiter zu verfolgen.

8. Vorrichtung gemäß Anspruch 7, **dadurch gekennzeichnet, dass** die Abstandssensoren (11) Ultraschallsensoren, Radarsensoren, Infrarotsensoren oder LIDAR-Sensoren sind.

9. Vorrichtung gemäß Anspruch 7 oder 8, **dadurch gekennzeichnet, dass** eine Auswerteeinheit umfasst ist, mit der von den Abstandssensoren (11) erfasste Daten ausgewertet werden, um Abstand und Geschwindigkeit eines Objektes (7) relativ zum Fahrzeug zu bestimmen.

## Claims

1. Method for recording the environment of a vehicle (1), in which a camera (3) is used to record a narrow region (5) at a predefined distance from the vehicle (1), wherein the camera records a complete image and only the relevant regions of the image are evaluated, and a check is carried out in order to determine whether an object (7) moves into the narrow region (5), thus producing a light barrier effect, and a region (9) within the predefined distance is recorded using distance sensors (11), wherein only that section of the region (9) within the predefined distance into which the object (7) has moved is respectively recorded, wherein the object continues to be recorded using distance sensors and does not continue to be tracked with the camera.

2. Method according to Claim 1, **characterized in that** the Doppler effect is used to record the speed of an object (7) which moves towards the vehicle (1) or moves away from the vehicle (1).

3. Method according to Claim 1 or 2, **characterized in that** an optical recording system is used to determine the speed of an object (7) which moves parallel to the vehicle (1).

4. Method according to one of Claims 1 to 3, **characterized in that** the section which is recorded by the distance sensors (11) is respectively determined using the speed and the direction of the recorded object (7) with respect to the vehicle (1) in such a manner that the object (7) is in the recorded section.

5. Method according to one of Claims 1 to 4, **characterized in that** a warning is output to the driver of the vehicle (1) if a moving object (7) is recorded.

6. Method according to one of Claims 1 to 5, **characterized in that** the predefined distance is the distance up to which it is possible to record using the distance sensors (11).

7. Apparatus for carrying out the method according to one of Claims 1 to 6, comprising at least one camera (3) for optically recording the environment, wherein the camera is set up to record a complete image, and means for evaluating the image recorded by the camera (3) which are set up to evaluate only the relevant regions of the image in order to detect whether an object (7) moves into a narrow region recorded by the camera (3) at a predefined distance, wherein a control device is provided and detects a resulting light barrier effect, and distance sensors (11) for recording the region (9) surrounded by the narrow region (5) of the camera (3), wherein the control device is set up to continue to record the object using distance sensors and not to continue to track the object using the camera.

8. Apparatus according to Claim 7, **characterized in that** the distance sensors (11) are ultrasonic sensors, radar sensors, infrared sensors or lidar sensors.

9. Apparatus according to Claim 7 or 8, **characterized in that** an evaluation unit is included and is used to evaluate data recorded by the distance sensors (11) in order to determine the distance and speed of an object (7) relative to the vehicle.

## Revendications

1. Procédé de couverture de l'environnement d'un véhicule (1), selon lequel une zone étroite (5) est couverte avec une caméra (3) à une distance prédéfinie du véhicule (1), une image entière étant enregistrée par la caméra et seules les zones pertinentes de l'image étant interprétées et un contrôle étant effectué pour vérifier si un objet (7) se déplace dans la zone étroite (5), un effet de barrière photoélectrique étant ainsi produit, et une zone (9) se trouvant à l'intérieur de la distance prédéfinie étant couverte avec des capteurs de distance (11), seule étant couverte la portion de la zone (9) se trouvant à l'intérieur de la distance prédéfinie dans laquelle l'objet (7) s'est déplacé, la détection de l'objet se poursuivant avec des capteurs de distance et son suivi ne se poursuivant pas avec la caméra.

2. Procédé selon la revendication 1, **caractérisé en ce que** l'effet Doppler est utilisé pour acquérir la vitesse d'un objet (7) qui se déplace en direction du véhicule (1) ou qui s'éloigne du véhicule (1).

3. Procédé selon la revendication 1 ou 2, **caractérisé en ce qu'**un système d'acquisition optique est utilisé pour déterminer la vitesse d'un objet (7) qui se déplace parallèlement au véhicule (1).

4. Procédé selon l'une des revendications 1 à 3, **caractérisé en ce que** la portion qui est couverte par les capteurs de distance (11) est à chaque fois déterminée au moyen de la vitesse et de la direction de l'objet (7) détecté par rapport au véhicule (1) de telle sorte que l'objet (7) se trouve dans la portion couverte.

5. Procédé selon l'une des revendications 1 à 4, **caractérisé en ce qu'**un avertissement est délivré au conducteur du véhicule (1) lors de la détection d'un objet (7) qui se déplace.

6. Procédé selon l'une des revendications 1 à 5, **caractérisé en ce que** la distance prédéfinie est la distance jusqu'à laquelle une détection est possible avec les capteurs de distance (11).

7. Dispositif pour mettre en oeuvre le procédé selon l'une des revendications 1 à 6, comprenant au moins une caméra (3) servant à la couverture optique de l'environnement, la caméra étant conçue pour enregistrer une image complète, et des moyens pour interpréter l'image acquise par la caméra (3), lesquels sont conçus pour n'interpréter que les zones pertinentes de l'image afin d'identifier si un objet (7) se déplace à une distance prédéfinie dans une zone étroite couverte par la caméra (3), un contrôleur étant présent, lequel détecte un effet de barrière photoélectrique qui est obtenu, ainsi que des capteurs de distance (11) destinés à couvrir la zone (9) qui est entourée par la zone étroite (5) de la caméra (3), le contrôleur étant conçu pour poursuivre la détection de l'objet avec les capteurs de distance et ne pas poursuivre son suivi avec la caméra.

8. Dispositif selon la revendication 7, **caractérisé en ce que** les capteurs de distance (11) sont des capteurs à ultrasons, des capteurs radar, des capteurs à infrarouges ou des capteurs LIDAR.

9. Dispositif selon la revendication 7 ou 8, **caractérisé en ce qu'**une unité d'interprétation est incluse, avec laquelle sont interprétées les données acquises par les capteurs de distance (11) afin de déterminer la distance et la vitesse d'un objet (7) par rapport au véhicule.
